# EUROPÄISCHE PATENTSCHRIFT

(11) **EP 0 573 789 B1**
(45) Veröffentlichungstag und Bekanntmachung des Hinweises auf die Patenterteilung: **21.01.1998**
(21) Anmeldenummer: 93107448.8
(22) Anmeldetag: 07.05.1993
(51) Int. Cl.: G11B 23/023

(54) **Vorrichtung zur Aufbewahrung von Magnetbandkassetten**
Device for storing magnetic tape cassettes
Dispositif d'emmagasinage de cassettes à bande magnétique

(30) Priorität: 12.06.1992 DE 4219232
(43) Veröffentlichungstag der Anmeldung: 15.12.1993
(73) Patentinhaber: fischerwerke Artur Fischer GmbH & Co. KG, D-72178 Waldachtal (DE)
(72) Erfinder: Bieck, Torsten, Dipl.-Ing., W-7295 Dornstetten/Hallwangen (DE); Kaupp, Eduard, W-7244 Salzstetten (DE)

(56) Entgegenhaltungen:
- WO-A-92/22899
- DE-C- 2 462 769
- DE-C- 2 462 899
- FR-A- 2 274 107
- US-A- 5 097 952

## Beschreibung

Die Erfindung betrifft eine Vorrichtung zur Aufbewahrung von Magnetbandkassetten gemäß der Gattung des Anspruchs 1.

Eine solche Vorrichtung zum Aufbewahren von Magnetbandkassetten ist aus der FR-A-2 274 101 bekannt. Die bekannte Vorrichtung umfaßt eine Gehäuse mit einem Schieber, der gegen eine Federkraft in das Gehäuse einschiebbar und in der eingeschobenen Position verriegelbar ist. Der Schieber nimmt die jeweils aufzubewahrende Kassette auf, die in der Entnahmeposition des Schiebers bequem entnommen oder ausgetauscht werden kann. In der Entnahmeposition steht der Schieber deutlich aus dem Gehäuse heraus. In der Aufbewahrungsposition läßt sich der Schieber im Gehäuse verriegeln, wobei durch Betätigung einer Taste die Entriegelung erfolgen kann.

Bandwickelkerne handelsüblicher Kompaktkassetten sind frei zugänglich. Damit die Bandwickelkerne und damit auch das aufgewickelte Bandmaterial bei Erschütterungen keine unkontrollierten Bewegungen ausführt, weist die bekannte Vorrichtung einen Sperrhebel für jeden Bandwickelkern auf. Der Sperrhebel liegt bei in der Entnahmeposition befindlichem Schieber in einer Aussparung eines Bodens des Schiebers flach ein. Beim Einschieben des Schiebers in das Gehäuse stößt ein abgewinkeltes Ende des Sperrhebels gegen einen Anschlag des Gehäuses und verschwenkt dadurch den Sperrhebel in eine stehende Sperrposition, in der er in den jeweiligen Bandwickelkern der Kompaktkassette eingreift und diesen gegen Verdrehen sichert. Die bekannte Vorrichtung hat jedoch den Nachteil, daß sich wegen der sich aufrichtenden Sperrhebel keine geschlossene Magnetbandkassette in ihr aufbewahren läßt, weshalb die bekannte Vorrichtung zur Aufnahme von Digitalkassetten (DCC), die vollständig geschlossene Breitseiten besitzen, nicht geeignet ist.

Die Digitalkassetten können in Wiedergabegeräten abgespielt werden, die bezüglich Kompaktkassetten kompatibel sind. Daher ist eine Vorrichtung wünschenswert, die sich zur Aufbewahrung sowohl von Kompaktkassetten als auch von Digitalkassetten eignet. Die Abmessungen der Digitalkassetten stimmen im wesentlichen mit den Kompaktkassetten überein, jedoch besitzen genormte Kompaktkassetten eine Gehäuseverdickung in dem Bereich, wo die Wiedergabe- und Aufnahmeköpfe eines Tonbandgerätes mit dem Magnetband zur Anlage kommen. Die Gehäuseverdickung wird durch zwei auf den gegenüberliegenden Breitseiten der Kompaktkassette ausgebildete Erhebungen gebildet, die in der Draufsicht eine trapezförmige Kontur haben. Die Digitalkassetten besitzen dagegen keine derartigen Erhebungen.

Eine Vorrichtung zur Aufbewahrung von sowohl Kompaktkassetten als auch Digitalkassetten ist bekannt aus der nachveröffentlichten WO-A-92/22899. Ein zum Einlegen der Magnetbandkassette vorgesehener Schieber der bekannten Vorrichtung weist ein Betätigungselement auf, das schwenkbar in einer Aussparung seines Bodens angebracht ist. Über eine Zugstange, die gelenkig an dem Betätigungselement und an einem Sperrorgan angebracht ist, ist das Betätigungselement mit dem Sperrorgan verbunden. Das Sperrorgan ist ebenfalls in der Aussparung des Bodens des Schiebers schwenkbar untergebracht. Beim Einlegen einer Kompaktkassette in den Schieber drückt deren Gehäuseverdickung das Betätigungselement nieder und verschwenkt über die Zugstange das Sperrorgan in eine stehende Sperrposition, in der es in den Bandwickelkern der Kompaktkassette eingreift und diesen gegen Verdrehen sichert. Wird eine Digitalkassette, die keine solche Gehäuseverdickung aufweist, in den Schieber eingelegt, werden das Betätigungselement und das Sperrorgan nicht verschwenkt. Nachteil dieser bekannten Vorrichtung ist die verhältnismäßig aufwendige Konstruktion von Betätigungselement, Zugstange und Sperrorgan, die zudem wegen der geringen zur Verfügung stehenden Bauhöhe sehr klein ausgeführt werden müssen.

Der Erfindung liegt die Aufgabe zugrunde, eine Vorrichtung zur Aufbewahrung von Kompaktkassetten und Digitalkassetten zu schaffen, die Sperrorgane besitzen, die nur beim Einlegen einer Kompaktkassette in die Sperrposition gelangen.

Die Lösung dieser Aufgabe erhält man durch die im Anspruch 1 angegebenen Merkmale. Die gegen eine Federkraft in Sperrposition verschwenkbaren Sperrorgane werden über Betätigungselemente beim Einlegen einer Kompaktkassette betätigt. Die Betätigungselemente befinden sich zu diesem Zweck in einer Vertiefung, in die die Kompaktkassette mit einer der beiden an deren Breitseiten ausgebildeten Erhebungen eingreift. Beim Einlegen einer Digitalkassette, die keine derartige Erhebung besitzt, werden die Betätigungselemente nicht betätigt, so daß die Sperrorgane nicht aus der Auflageebene heraus geschwenkt werden. Beim Einlegen einer Digitalkassette kommen die Sperrorgane nicht mit dem Kassettengehäuse in Berührung, wodurch sonst entstehende Kratzspuren am Kassettengehäuse vermieden werden.

Gemäß der Erfindung sind die Sperrorgane jeweils an einer Welle seitlich abstehend ausgebildet, an der auch exzentrisch ein Betätigungselement angeformt ist. Die Welle mit Betätigungselement und Sperrorgan besteht vorzugsweise aus einem einstückigen Kunststoff-Spritzteil. Die Ausrichtung von Sperrorgan und Betätigungselement ist in etwa entgegengesetzt, so daß beim Niederdrücken des Betätigungselements sich die Welle um etwa 70 ° dreht und dabei das an ihr abstehende Sperrorgan nach oben in die Sperrposition schwenkt. Das Sperrorgan kann ein flacher Kunststoffriegel sein, der eine Breite hat, die geringfügig kleiner ist als der Wickelkerndurchmesser, jedoch größer als der Abstand gegenüberliegender Mitnehmer des Wickelkerns. Dadurch wird erreicht, daß das Sperrorgan problemlos im Bereich des Wickelkerns in die Sperrposition eingeschwenkt werden kann und eine sichere Wickelkernsperre bildet.

Die Vorrichtung besitzt vorzugsweise einen Schieber, mit dem eine eingelegte Magnetbandkassette aus dem Gehäuse in eine bequem zugängliche Entnahmeposition herausschiebbar ist. Ist die Vorrichtung so ausgebildet, daß die Magnetbandkassetten quer eingelegt werden, so besitzt der Schieber unmittelbar hinter einer Frontblende die Vertiefung, in welche die korrespondierende Erhebung einer Kompaktkassette eingreifen kann. Beim Einlegen hat dies den Vorteil, daß zunächst die Kassette auf den Schieber mit ihrem rückwärtigen Bereich aufgelegt und nach hinten geschoben wird, bis der vordere Bereich mit den Erhebungen sich hinter der Frontblende befindet und auf den Schieber abgesenkt werden kann. Erst bei Erreichen der Endposition werden die Betätigungselemente und damit die Sperrorgane betätigt. Beim Entnehmen der Kompaktkassette muß in umgekehrter Reihenfolge zunächst der Bereich der Kassette mit den Erhebungen angehoben werden, wodurch die Sperrorgane unwirksam werden, so daß die Kompaktkassette dann ungehindert vom Schieber entnommen werden kann.

Die Sperrorgane befinden sich bei nicht betätigten Betätigungselementen unterhalb der Auflagefläche, ein vorgespannter Federdraht greift an einem an der Welle abstehenden Vorsprung an und hält das zugeordnete Sperrorgan mittels Federkraft in dieser Position. Grundsätzlich könnte hier auch ein anderes Federelement das hierzu erforderliche Drehmoment auf die Welle übertragen.

Die Erfindung wird nachfolgend anhand eines in der Zeichnung dargestellten Ausführungsbeispiels näher erläutert.

Es zeigen:
Figur 1 den Längsschnitt durch eine Vorrichtung mit in Entnahmeposition befindlichem Schieber,
Figur 2 die Draufsicht der Vorrichtung von Figur 1,
Figur 3 die Draufsicht bei aufgelegter Kompaktkassette im Bereich eines Sperrorganes,
Figur 4 die Unterseite des Schiebers im Bereich des Sperrorganes bei aufgelegter Kompaktkassette,
Figur 5 den Schnitt AA von Figur 3,
Figur 6 den Schnitt BB von Figur 3,
Figur 7 die Draufsicht im Bereich des Sperrorganes bei aufliegender Digitalkassette,
Figur 8 die Unterseite des Schiebers im Bereich eines Sperrorganes bei aufliegender Digitalkassette und
Figur 9 den Schnitt CC gemäß Figur 7.

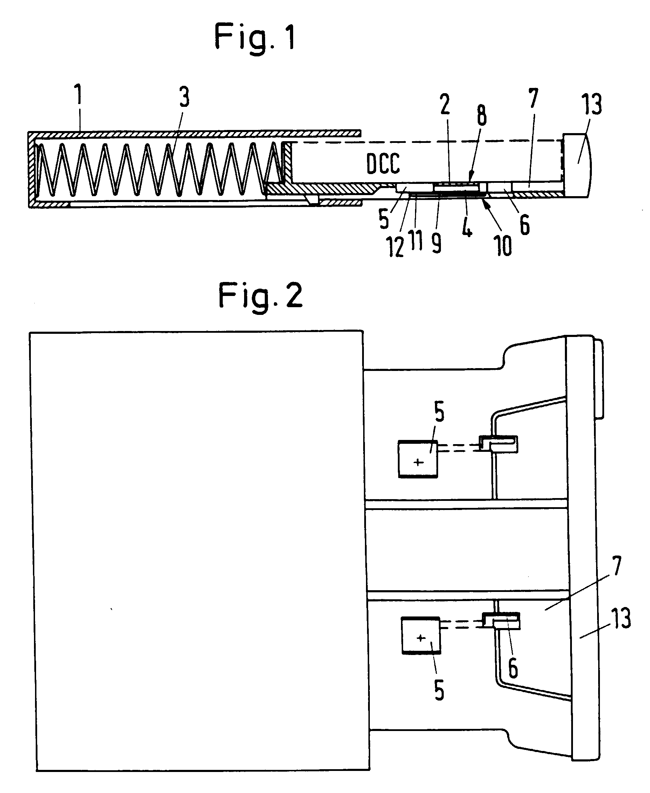

Die in Figur 1 dargestellte Vorrichtung zur Aufbewahrung von Kompaktkassetten und Digitalkassetten besteht aus einem Gehäuse 1 und einem Schieber 2, der sich hier in der Entnahmeposition befindet und gegen die Kraft einer Druckfeder 3 in das Gehäuse 1 in eine Aufbewahrungsposition einschiebbar und verriegelbar ist. Die Verriegelungseinrichtungen sind hier nicht dargestellt, da diese allgemein bekannt und nicht Gegenstand der vorliegenden Erfindung sind.

Am Schieber 2 ist eine Welle 4 drehbar gelagert, die am einen Ende ein flaches Sperrorgan 5 und am anderen Ende ein Betätigungselement 6 besitzt. In der Draufsicht von Figur 2 ist deutlich zu erkennen, daß das Sperrorgan 5 zur einen Seite hin von der Welle 4 absteht, während das Betätigungselement 6 zur anderen Seite hin - also gegenüberliegend zum Sperrorgan 5 - von der Welle 4 absteht.

Figur 1 zeigt, daß das Betätigungselement 6 in eine Vertiefung 7 ragt und in der dargestellten unbelasteten Position nicht über die Auflagefläche 8 des Schiebers 2 übersteht. Das gleiche gilt für das Sperrorgan 5, welches sich ebenfalls unterhalb der Auflagefläche 8 befindet. Ein Federdraht 9, der an der Unterseite 10 des Schiebers 2 befestigt ist, greift mit seinem freien Ende 11 an einem Vorsprung 12 an, der radial an der Welle 4 nach unten absteht. Der vorgespannte Federdraht 9 drückt somit das Sperrorgan 5 in die dargestellte untere Position.

Beim Auflegen einer Digitalkassette (DCC), deren Umriß hier mit unterbrochener Linie dargestellt ist, kommt diese nicht mit dem Betätigungselement 6 in Berührung, so daß auch das Sperrorgan 5 nicht aus der dargestellten Position verschwenkt wird. Das Sperrorgan 5 ist somit bei aufliegender Digitalkassette wirkungslos.

Die Vorrichtung gemäß Figur 1 und Figur 2 ist zur Aufnahme von quer einzulegenden Magnetbandkassetten bestimmt. Beim Einlegen einer Kompaktkassette greift diese mit einer an der Kompaktkassette ausgebildeten Erhebung in die hinter der Frontblende 13 befindliche Vertiefung 7 ein.

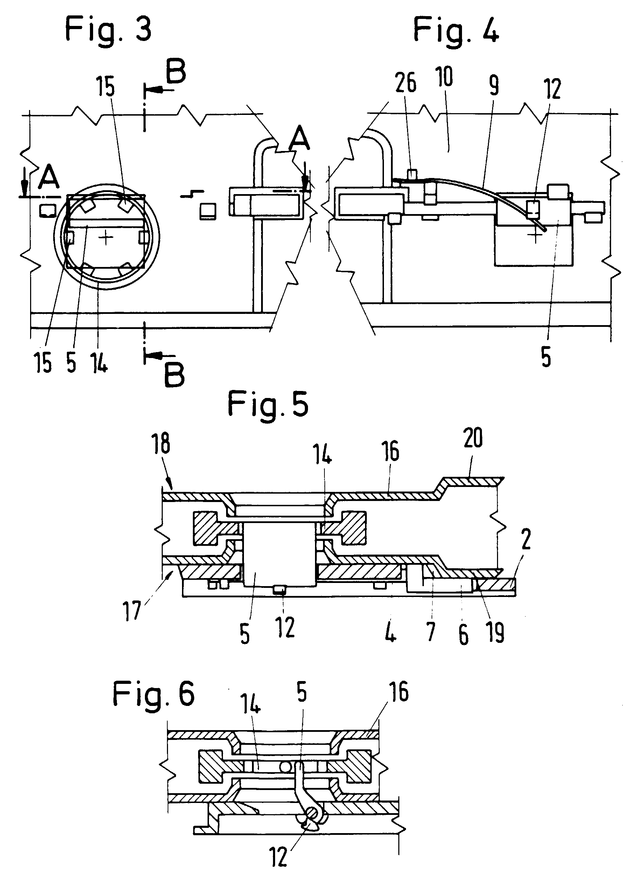

In Figur 3 bis Figur 6 ist die Betätigung der Sperrorgane beim Aufliegen einer Kompaktkassette dargestellt. Figur 3 zeigt dabei die Draufsicht im Bereich eines Wickelkerns 14, in den das aufgestellte Sperrorgan 5 eingreift. Am Wickelkern 14 stehen nach innen gerichtete Mitnehmer 15 ab, die in Verbindung mit dem Sperrorgan 5 den Wickelkern 14 gegen Verdrehen sichern.

Figur 4 zeigt die Unterseite des Schiebers im Bereich des Sperrorgans 5. Die Anordnung des Federdrahts 9, der an dem Vorsprung 12 angreift, ist hier deutlich ersichtlich. Der Federdraht 9 ist an seinem Fußpunkt 26 am Schieberboden 10 befestigt.

In Figur 5 ist die Betätigung des Betätigungselements 6 durch die aufliegende Kompaktkassette 16 ersichtlich. Die Kompaktkassette 16 besitzt an ihren beiden gegenüberliegenden Flachseiten 17, 18 jeweils eine Erhebung 19, 20, die in der Draufsicht an die Form der Vertiefung 7 angepaßt sind. Die Erhebung 19 greift in die Vertiefung 7 ein und drückt dabei das Betätigungselement 6 nach unten in die dargestellte Position. Dabei wird die Welle 4 gedreht und das an ihr seitlich abstehende Sperrorgan 5 in die dargestellte obere Sperrposition geschwenkt. Wird die Kompaktkassette 16 wieder entnommen, so drückt der Federdraht 9 das Sperrorgan 5 wieder in die in Figur 1 und Figur 2 dargestellte Position.

Der Schnitt BB gemäß Figur 6 zeigt das nach oben gerichtete Sperrorgan 5, welches in einen Bandwickelkern 14 eingreift.

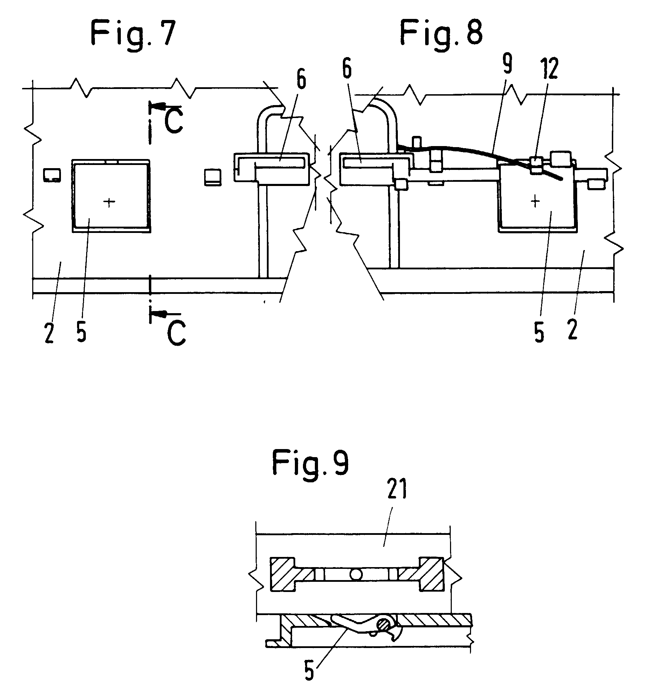

In den Figuren 7 bis 9 ist der Bereich eines Sperrorgans 5 bei aufliegender Digitalkassette (DCC) dargestellt. Die Draufsicht von Figur 7 zeigt das in der Auflagefläche 8 einliegende Sperrorgan 5. Die Unterseite des Schiebers 2, die in Figur 8 dargestellt ist, zeigt auch die gegenüber Figur 4 geänderte Auslenkung des Federdrahts 9.

Der Schnitt CC gemäß Figur 7, der in Figur 9 dargestellt ist, zeigt, wie das Sperrorgan 5 in die Aufbewahrungsfläche eingetaucht ist. Die auf der Auflagefläche aufliegende Digitalkassette 21 kommt mit dem Sperrorgan 5 nicht in Berührung. Das Sperrorgan 5 ist als flache, geringfügig abgewinkelte Platte ausgebildet und könnte auch als Sperrlasche bezeichnet werden.

## Patentansprüche

1. Vorrichtung zur Aufbewahrung von Magnetbandkassetten (16), die in die beiden Bandwickelkerne (14) einer in der Vorrichtung auf einer Auflagefläche (8) aufgelegten Kompaktkassette (16) eingreifende Sperrorgane (5) hat, die bei entnommener Kompaktkassette (16) unter die Auflagefläche (8) tauchen, **dadurch gekennzeichnet,** daß die Sperrorgane (5) zum Sperren der Bandwickelkerne (14) gegen die Kraft von Federelementen (9) in eine Sperrposition verschwenkbar sind, daß die den Bandwickelkernen (14) zugeordneten Sperrorgane (5) jeweils am einen Ende einer Welle (4) seitlich abstehen, an deren anderem Ende jeweils ein Betätigungselement (6) seitlich absteht und eine exzentrische Verlängerung der Welle (4) bildet, daß eine Erhebung (19) an der eingelegten Kompaktkassette (16) in eine Vertiefung (7) ragt und dort gegen die in der Vertiefung befindlichen Betätigungselemente (6) drückt und dadurch die Sperrorgane (5) in die Sperrposition verschwenkt, und daß die Betätigungselemente (6) maximal bis zur Auflagefläche (8) vom Grund der Vertiefung (7) angehoben sind.

2. Vorrichtung nach Anspruch 1, **dadurch gekennzeichnet,** daß das Sperrorgan (5) und das Betätigungselement (6) an der Welle (4) um einen Winkel von 120° bis 180° zueinander versetzt ausgerichtet sind.

3. Vorrichtung nach einem der Ansprüche 1 oder 2, **dadurch gekennzeichnet,** daß die Sperrorgane (5), die Betätigungselemente (6) sowie die Vertiefung (7) im Bereich der Betätigungselemente (6) an einem aus dem Gehäuse (1) der Vorrichtung in eine Entnahmeposition verschiebbaren Schieber (2) angeordnet sind, dessen Oberseite die Auflagefläche (8) für eine in der Vorrichtung aufzubewahrende Kompaktkassette (16) oder Digitalkassette (21) bildet.

4. Vorrichtung nach einem der vorhergehenden Ansprüche, **dadurch gekennzeichnet,** daß als Federelement jeweils ein vorgespannter Federdraht (9), dessen Fußpunkt (26) unter der Aufbewahrungsfläche (8) befestigt ist, mit seinem freien Ende an einem radial an der Welle (4) abstehenden Vorsprung (12) angreift.

5. Vorrichtung nach einem der vorhergehenden Ansprüche, **dadurch gekennzeichnet,** daß die Magnetbandkassette quer auf dem Schieber (2) bzw. in dem Gehäuse (1) der Vorrichtung einliegt und sich die Vertiefung (7) im vorderen Bereich hinter einer Frontblende (13) befindet.

## Claims

1. A device for storing magnetic tape cassettes (16), which has locking members (5) that engage the two tape reel hubs (14) of a compact cassette (16) placed in the device on a supporting surface (8), which locking members lie below the supporting surface (8) with the compact cassette (16) removed, characterized in that the locking members (5) for locking the tape reel hubs (14) are pivotable into a locking position against the force of spring elements (9), each locking member (5) associated with the tape reel hubs (14) projects laterally from one end of a shaft (4), from the other end of which an actuating element (6) projects laterally and forms an eccentric extension of the shaft (4), an elevation (19) on the inserted compact cassette (16) projects into a recess (7) and presses there against the actuating elements (6), which are located in the recess, causing the locking members (5) to be pivoted into the locking position, and the actuating elements (6) are raised from the base of the recess (7) at most as far as the supporting surface (8).

2. A device according to Claim 1, characterized in that the locking member (5) and the actuating element (6) on the shaft (4) are arranged offset in relation to one another by an angle of 120° to 180°.

3. A device according to one of claims 1 and 2, characterized in that the locking members (5), the actuating elements (6) and the recess (7) in the region of the actuating elements (6) are arranged on a slider member (2) that is arranged to be pushed out of the housing (1) of the device into a removal position, the top side of which slider member forms the supporting surface (8) for a compact cassette (16) or digital cassette (21) to be stored in the device.

4. A device according to one of the preceding claims, characterized in that, as the spring element, a pre-stressed spring wire (9), the root end (26) of which is fixed beneath the supporting surface (8), acts with its free end on a projection (12) projecting radially from the shaft (4).

5. A device according to one of the preceding claims, characterized in that the magnetic tape cassette lies transversely on the slider member (2), or in the housing (1) of the device, and the recess (7) is located in the front region behind a front wall (13).

## Revendications

1. Dispositif d'emmagasinage de cassettes à bande magnétique (16) qui comporte des organes de verrouillage (5) qui viennent en prise dans les deux bobineaux (14) d'une cassette compacte (16) placée sur une surface d'appui (8) dans le dispositif et qui, lorsque l'on enlève la cassette compacte (16), plongent sous la surface d'appui (8), caractérisé par le fait que les organes de verrouillage (5) peuvent, pour verrouiller les bobineaux (14), pivoter en position de verrouillage à l'encontre de la force d'éléments élastiques (9), que les organes de verrouillage (5), correspondant aux bobineaux (14), viennent chacun latéralement en saillie à une extrémité d'un arbre (4) à l'autre extrémité duquel vient latéralement en saillie un élément de manoeuvre (6) qui forme un prolongement excentré de l'arbre (4), qu'une surépaisseur (19) pénètre, la cassette compacte (16) étant mise en place, dans un creux (7) et y appuie contre les éléments de manoeuvre (6) qui se trouvent dans le creux et que de ce fait les organes de verrouillage (5) pivotent en position de verrouillage et que, depuis le fond du creux (7), les éléments de manoeuvre (6) se soulèvent au maximum jusqu'à la surface d'appui (8).

2. Dispositif selon la revendication 1, caractérisé par le fait que l'organe de verrouillage (5) et l'élément de manoeuvre (6) sont orientés sur l'arbre (4) décalés d'un angle de 120° à 180° l'un par rapport à l'autre.

3. Dispositif selon l'une des revendications 1 ou 2, caractérisé par le fait que les organes de verrouillage (5), les éléments de manoeuvre (6) ainsi que le creux (7) sont disposés, dans la zone des éléments de manoeuvre (6), sur un tiroir (2) que l'on peut faire coulisser hors du boîtier (1) du dispositif pour venir en position d'enlèvement et dont la face supérieure forme la surface d'appui (8) pour une cassette compacte (16) ou une cassette numérique (21) à emmagasiner dans le dispositif.

4. Dispositif selon l'une des revendications précédentes, caractérisé par le fait que comme élément élastique un fil d'acier à ressort (9), précontraint, dont le pied (26) est fixé sous la surface d'emmagasinage (8), agit par son extrémité libre, sur un tenon (12) qui saille radialement sur l'arbre (4).

5. Dispositif selon l'une des revendications précédentes, caractérisé par le fait que la cassette à bande magnétique se place transversalement sur le tiroir (2) ou dans le boîtier (1) du dispositif et que le creux (7) se trouve dans la zone avant, derrière une façade (13).
